# EUROPEAN PATENT APPLICATION

(11) **EP 3 809 289 A1**
(43) Date of publication of application: **21.04.2021**
(21) Application number: 18919598.5
(22) Date of filing: 16.11.2018
(51) Int. Cl.: G06F 17/27

(54) **METHOD AND APPARATUS FOR PROCESSING WORD BANK**

(30) Priority: 25.05.2018 CN 201810515382
(71) Applicant: Tencent Music Entertainment Technology (Shenzhen) Co., Ltd., Shenzhen, Guangdong 518000 (CN)
(72) Inventor: FENG, Suiyu, Hong Kong Cooperative Zone Shenzhen, Guangdong 518000 (CN)
(74) Representative: Cabinet Beau de Loménie
(86) International application number: PCT/CN2018/116037
(87) International publication number: WO 2019/223259

(57) **Abstract**

A method and an apparatus for processing word banks, which fall within the field of computers. The method includes: acquiring a first data record in a first word bank, wherein the first data record includes a multi-kanji entry and a first kana set corresponding to each kanji in the multi-kanji entry, and the first kana set corresponding to the kanji includes at least one kana corresponding to the kanji; searching for a plurality of target data records corresponding to the first data record in the second word bank, wherein the target entries in each target data record are different constituent parts of the multi-kanji entry, and the target entries in each target data record form the multi-kanji entry, and a second kana set corresponding to each kanji in the target entry in the target data record is respectively the same as the first kana set corresponding to each kanji; and when the plurality of data records corresponding to the first data record are not found in the second word bank, saving the first data record in the second word bank. The method may improve the efficiency for annotating kanas.

## Description

This application claims priority to Chinese Patent Application No.201810515382.X, filed on May 25, 2018 and entitled "METHOD AND APPRATUS FOR PROCESSING WORD BANK", the entire contents of which are incorporated herein by reference.

### TECHNICAL FIELD

The present disclosure relates to the field of computer technology, and more particularly to a method and an apparatus for processing word banks.

### BACKGROUND

Japanese language includes kanjis and kanas and the pronunciation of a kanji can be annotated with at least one kana. For example, the pronunciation of kanjis " 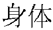 " may be annotated with " 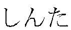 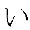 ," i.e., the pronunciation of " 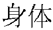 " may be " 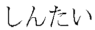 ." In scenarios such as Japanese articles or song lyrics, kanas are often annotated with above kanjis, for example " 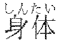 ," such that readers may reader more conveniently.

A tool for making kanas for Japanese texts is currently provided. A word bank which includes a plurality of data records is present in the tool, and each data record includes an entry and at least one kana corresponding to each kanji in the entry. When a kana is annotated, the tool may be enabled to read the entry to be annotated in the text, find the kana corresponding to each kanji in the entry in the word bank according to the entry, and mark the kana or kanas found above each kanji included in the entry in the Japanese text.

In the process of implementing the present disclosure, the inventor found that the above method has at least the following defect:

At present, the capacity of the word bank is relatively large and the word bank include a large number of data records. Therefore, it takes a relatively long period of time to acquire the kana corresponding to the kanji in the entry form the word bank, which reduces the efficiency of annotating kanas.

### SUMMARY

In order to improve the efficiency of annotating kanas, embodiments of the present disclosure provide a method and apparatus for processing word banks. The technical solutions are as follows:

In a first aspect, embodiments of the present disclosure provide a method for processing word banks. The method includes:
acquiring a first data record in a first word bank, wherein the first data record includes a multi-kanji entry and a first kana set corresponding to each kanji in the multi-kanji entry, the multi-kanji entry being an entry which includes a plurality of kanjis, and the first kana set corresponding to a kanji including at least one kana corresponding to the kanji;
searching for a plurality of target data records corresponding to the first data record in a second word bank, wherein target entries in each of the plurality of target data records are different constituent parts of the multi-kanji entry, the target entries in the each of the plurality of target data records form the multi-kanji entry, and a second kana set corresponding to each kanji in the target entry in the target data record is the same as the first kana set corresponding to the each kanji; and
saving the first data record in the second word bank, when the plurality of target data records corresponding to the first data record are not found in the second word bank.

Optionally, searching for the plurality of target data records corresponding to the first data record in the second word bank includes:
dividing the multi-kanji entry in the first data record into N single entries, wherein N is an integer greater than 1, and the single entries are entries each including a kanji;
searching for a target data record corresponding to each of the N single entries in the second word bank, wherein the target data record corresponding to the single entry includes the each of the N single entries and the second kana set corresponding to the kanji in the each of the N single entries, and the second kana set corresponding to the kanji is the same as the first kana set corresponding to the kanji; and
determining that the plurality of target data records corresponding to the first data record are not found in the second word bank, when the target data record corresponding to the each of the N single entries is not found in the second word bank.

Optionally, before acquiring the first data record in the first word bank, the method further includes:
saving each second data record in the first word bank in the second word bank, wherein the second data record includes a single entry and a first kana set corresponding to the kanji in the single entry.

Optionally, saving the each second data record in the first word bank in the second word bank includes:
acquiring any data record in the first word bank; and
determining that an entry in the data record is a single entry and saving the data record in the second word bank, when the data record includes a first kana set.

Optionally, before acquiring the first data record in the first word bank, the method further includes:
saving a data record which includes a preset application scenario in a third word bank in the first word bank, wherein each data record in the third word bank includes an entry, a kana set corresponding to each kanji in the entry and an application scenario.

Optionally, saving the data record which includes the preset application scenario in the third word bank in the first word bank includes:
acquiring a data record which includes a preset application scenario from the third word bank, wherein the data record includes an entry, at least one kana set corresponding to each kanji in the first entry, a usage frequency of each of the at least one kana set, and the preset application scenario;
selecting, according to the usage frequency of at least one kana set corresponding to the each kanji, a kana set corresponding to the each kanji from at least one kana set corresponding to the each kanji respectively; and
forming a first data record with the entry and the kana set selected for the each kanji and saving the first data record in the first word bank.

In a second aspect, embodiments of the present disclosure provide an apparatus for processing word banks. The apparatus includes:
an acquiring module, configured to acquire a first data record in a first word bank, wherein the first data record includes a multi-kanji entry and a first kana set corresponding to each kanji in the multi-kanji entry, the multi-kanji entry being an entry which includes a plurality of kanjis, and the first kana set corresponding to the kanji including at least one kana corresponding to the kanji;
a searching module, configured to search for a plurality of target data records corresponding to the first data record in the second word bank, wherein target entries in each of the plurality of target data records are different constituent parts of the multi-kanji entry, the target entries in the each of the plurality of target data records form the multi-kanji entry, and a second kana set corresponding to each kanji in the target entry in the target data record is respectively the same as the first kana set corresponding to the each kanji; and
a saving module, configured to save the first data record in the second word bank, when the plurality of target data records corresponding to the first data record are not found in the second word bank.

Optionally, the searching module includes:
a dividing unit, configured to divide the multi-kanji entry in the first data record into N single entries, wherein N is an integer greater than 1, and the single entries are entries each including a kanji;
a searching unit, configured to search for the target data record corresponding to each of the N single entries in the second word bank, wherein the target data record corresponding to the single entry comprises the each of the N single entries and the second kana set corresponding to the kanji in the each of the N single entries the single entry, and the second kana set corresponding to the kanji is the same as the first kana set corresponding to the kanji; and
a first determining unit, configured to determine that the plurality of target data records corresponding to the first data record are not found in the second word bank, when the target data record corresponding to the each of the N single entries is not found in the second word bank.

Optionally, the saving module is further configured to:
save each second data record in the first word bank in the second word bank, wherein the second data record includes a single entry and a first kana set corresponding to the kanji in the single entry.

Optionally, the saving module includes:
a first acquiring unit, configured to acquire any data record in the first word bank; and
a second determining unit, configured to determine that an entry in the data record is a single entry and save the data record in the second word bank, when the data record includes a first kana set.

Optionally, the saving module is further configured to:
save a data record which includes a preset application scenario in a third word bank in the first word bank, wherein each data record in the third word bank includes an entry, a kana set corresponding to each kanji in the entry and an application scenario.

Optionally, the saving module further includes:
a second acquiring unit, configured to acquire a data record which includes a preset application scenario from the third word bank, wherein the data record includes an entry, at least one kana set corresponding to each kanji in the first entry, a usage frequency of each of the at least one kana set, and the preset application scenario;
a selecting unit, configured to select, according to the usage frequency of at least one kana set corresponding to the each kanji, a kana set corresponding to the each kanji from at least one kana set corresponding to the each kanji respectively; and
a saving unit, configured to form a first data record with the entry and a kana set selected for the each kanji and save the first data record in the first word bank.

In a third aspect, the embodiments of the present disclosure provide a non-volatile computer-readable storage medium for storing a computer program, and the computer program is loaded by a processor to execute an instruction for a method of the first aspect or of any optional implementation of the first aspect.

The technical solutions according to the embodiments of the present disclosure may achieve at least the following benefits.

For any first data record in the first word bank, if a plurality of target data records are present in the second word bank and the second kana set corresponding to a kanji in a target entry in each target data record is the same as the first kana set corresponding to the kanji in the first data record, the first data record is not saved in the second word bank. If the plurality of target data records are not present in the second word bank, the first data record is then saved in the second word bank, which deceases the number of data records in the second word bank and reduces the capacity of the second word bank. Due to the small capacity of the second word bank, the efficiency of making kanas may be improved when the second word bank is used to mark a kana or kanas of each kanji in a Japanese text.

It is to be understood that both the foregoing general description and the following detailed description are exemplary and explanatory only and are not intended to limit the present disclosure.

### BRIEF DESCRIPTION OF THE DRAWINGS

The accompanying drawings, which are incorporated in and constitute a part of this specification, illustrate embodiments consistent with the present disclosure, and together with the description, serve to explain the principles of the present disclosure.
FIG. 1 is a flow chart of a method for processing word banks that is provided by the embodiment of the present disclosure.
FIG. 2 is a flow chart of another method for processing word banks that is provided by the embodiment of the present disclosure.
FIG. 3-1 is a flow chart of the method for annotating kanas that is provided by the embodiment of the present disclosure.
FIG. 3-2 is a schematic diagram of a Japanese text that is provided by the embodiment of the present disclosure.
FIG. 4 is a structural schematic diagram of an apparatus for processing word banks that is provided by the embodiment of the present disclosure.
FIG. 5 is a structural schematic diagram of a terminal that is provided by the embodiment of the present disclosure.

Specific embodiments of the present disclosure have been shown by the above drawings, which will be described in more detail below. These drawings and descriptions are not intended to limit the scope of the concepts of the present disclosure in any way, but to explain the concepts of the present disclosure to those skilled in the art by referring to specific embodiments.

### DETAILED DESCRIPTION

Reference will now be made in detail to exemplary embodiments, examples of which are illustrated in the accompanying drawings. Where the following description hereinafter refers to the accompanying drawings, the same reference numerals in different drawings represent the same or similar elements, unless otherwise represented. The implementations set forth in the following description of exemplary embodiments do not represent all implementations consistent with the present disclosure. Instead, these implementations are merely examples of devices and methods consistent with aspects related to the disclosure as recited in the appended claims.

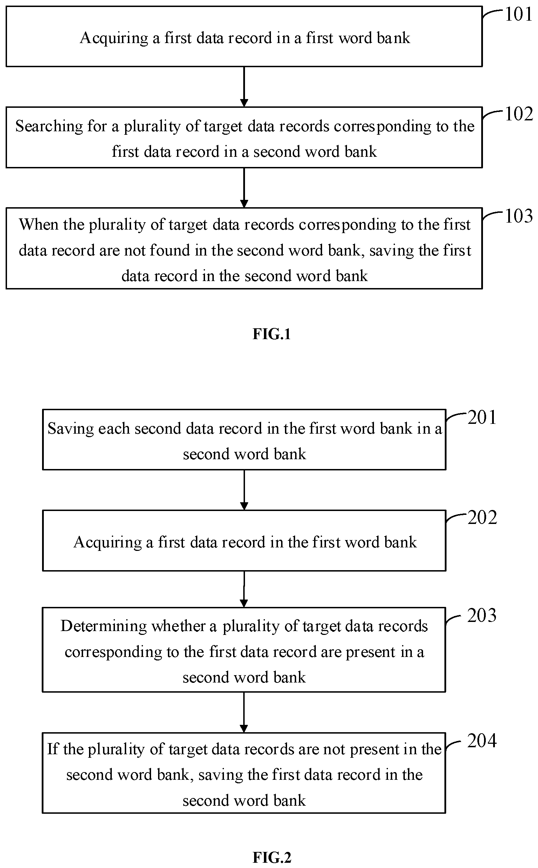

Referring to FIG. 1, an embodiment of the present disclosure provides a method for processing word banks. The method includes the following steps.

In step 101, a first data record in a first word bank is acquired, wherein the first data record includes a multi-kanji kanji entry and a first kana set corresponding to each kanji in the multi-kanji entry. The multi-kanji entry is an entry which includes a plurality of kanjis, and the first kana set corresponding to a kanji includes at least one kana corresponding to the kanji;
In step 102, a plurality of target data records corresponding to the first data record are found in a second word bank, wherein target entries in each of the plurality of target data records are different constituent parts of the multi-kanji entry, target entries in the each of the plurality of target data records form the multi-kanji entry, and a second kana set corresponding to each kanji in the target entry in the target data record is respectively the same as the first kana set corresponding to the each kanji; and
In step 103, the first data record is saved in the second word bank, when the plurality of target data records corresponding to the first data record are not found in the second word bank.

In the embodiments of the present disclosure, for any first data record in the first word bank, if a plurality of target data records are present in the second word bank and the second kana set corresponding to a kanji in a target entry in each of the plurality of target data records is the same as the first kana set corresponding to the kanji in the first data record, the first data record is not saved in the second word bank. If the plurality of target data records are not present in the second word bank, the first data record is then saved in the second word bank, which deceases the number of data records in the second word bank and reduces the capacity of the second word bank. The efficiency of annotating kanas may be improved when the second word bank is configured for annotating the kana or kanas of each kanji in a Japanese text.

Referring to FIG. 2, an embodiment of the present disclosure provides a method for processing word banks, wherein the method is employed to acquire the second word bank by simplifying the first word bank, and wherein the number of data records in the second word bank is less than the number of data records in the first word bank. The method includes the following steps.

In step 201, each second data record in the first word bank is saved in a second word bank, wherein the second data record includes a single entry and a first kana set corresponding to a kanji in the single entry, and wherein the single entry is an entry which includes a kanji.

Optionally, before this step is performed, a blank second word bank may be further created.

Optionally, before this step is performed, the first word bank may be further acquired. The first word bank may be acquired in a plurality of ways. In this step, the ways of acquiring the first word bank are listed respectively as follows:
In a first way in which the first word bank may be a word bank that includes a tool for annotating kanas, the word bank that includes a tool may be acquired as the first word bank in this step. The tool may be configured for annotating the kana or kanas of a kanji of a Japanese text in a certain application scenario. For example, application scenarios may be news or song lyrics or the similar, wherein a first tool corresponding to a news application scenario is used in a news application scenario, wherein the first tool is exclusively configured for annotating kanas of kanjis in news texts; and wherein a second tool corresponding to a song lyrics application scenario is sued in a song lyrics application scenario, wherein the second tool is exclusively configured for annotating kanas of kanjis in news texts. Namely, in this step, a word bank that includes the first tool is acquired as the first word bank or a word bank that includes the second tool is acquired as the first word bank.

Because the pronunciations of a kanji in different application scenarios are different, i.e., kanas annotated for the kanji in different application scenarios are different, the word bank of the first tool is different from that of the second tool.

In this step, in addition to the first way to acquire the first word bank, other ways may also be used to acquire the first word bank. For example, a second way is listed next in which data records which include a preset application scenario in a third word bank are saved in the first word bank.

Among them, the third word bank is a general word bank which can be used in different application scenarios, wherein each data record in the third word bank includes an entry, a kana set corresponding to each kanji in the entry, and an application scenario. A kana set corresponding to a kanji includes at least one kana corresponding to the kanji.

Optionally, for any data record in the third word bank and for each kanji in the data record, it is possible that the data record includes a kana set corresponding to the kanji or a plurality of kana sets corresponding to the kanji, i.e., each kanji in the data record corresponds to at least one kana set, and the data record may further include a usage frequency corresponding to each kana set and information such as the part of speech of the entry in the data record.

Optionally, when a data record including a preset application scenario is acquired in the third word bank, according to the usage frequency of at least one kana set corresponding to each kanji in the data record, a kana set corresponding to each kanji is selected respectively from at least one kana set corresponding to each kanji; the kana set selected for each kanji is used as a first kana set corresponding to each kanji; and the first kana set selected for each kanji in the entry and information such as the part of speech of the entry in the data record form a first data record and the first data record is saved in the first word bank.

Optionally, for at least one kana set corresponding to each kanji, a kana set with the maximum usage frequency is selected from at least one kana set corresponding to the kanji as a first kana set corresponding to the kanji.

Optionally, each data record in the first word bank includes an entry, a kana set corresponding to each kanji in the entry, and further includes information such as the part of speech of the entry.

For example, referring to a first word bank shown in Table 1 below, a first data record of the first word bank shown in Table 1 includes an entry " 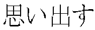 ," the first kana set ( 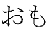 ) corresponding to the kanji " 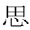 " in the entry, the first kana set ( 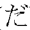 ) corresponding to the entry " 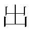 ," and the part of speech of the entry being a "five-segment verb." A second data record in the first word bank shown in Table 1 includes an entry " 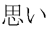 ," the first kana set ( 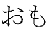 ) corresponding to the kanji " 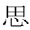 " in the entry and the part of speech of the entry being a "five-segment verb." A third data record in the first word bank shown in Table 1 includes an entry " 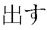 ," the first kana set ( 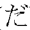 ) corresponding to the kanji " 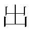 " in the entry and the part of the speech of the entry being a "five-segment verb".

**Table 1: A first word bank**

| Entry | A first kana set | Part of speech |
|---|---|---|
| 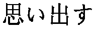 | ( 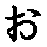 ), ( 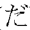 ) | Five-segment verb |
| 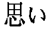 | ( 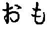 ) | Five-segment verb |
| 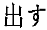 | ( 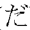 ) | Five-segment verb |
| ...... | ...... | ...... |

The step may be as follows: any data record is acquired in the first word bank; and if the data record includes a first kana set, the entry in the data record is determined to be a single entry including a kanji and the data record is saved in the second word bank as a second data record. Each second data record in the first word bank is acquired in the way mentioned above and saved in the second word bank.

For example, a first data record in the first word bank shown in Table 1 is acquired, wherein the first data record includes two first kana sets, ( 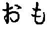 ) and ( 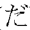 ), therefore the entry " 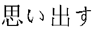 " in the first data record includes two kanjis and is not a single entry including a kanji.

A second data record in the first word bank shown in Table 1 is acquired, wherein the second data record includes a first kana set ( 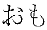 ), therefore the entry " 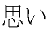 " in the second data record includes a kanji and the second data record may be saved as a second data record in a second word bank shown in Table 2.

A third data record in the first word bank shown in Table 1 is acquired, wherein the third data record includes a first kana set ( 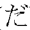 ), therefore the entry " 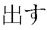 " in the third data record includes a kanji and the third data record may be saved as a second data record in a second word bank shown in Table 2.

**Table 2: A second word bank**

| Entry | A second kana set | Part of speech |
|---|---|---|
| 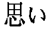 | ( 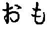 ) | Five-segment verb |
| 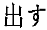 | ( 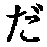 ) | Five-segment verb |
| 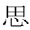 | ( 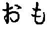 ) | Five-segment verb |
| ...... | ...... | ...... |

In step 202, a first data record is acquired in a first word bank, wherein the first data record includes a multi-kanji entry and a first kana set corresponding to each kanji in the multi-kanji entry. The multi-kanji entry is an entry which includes a plurality of kanjis, wherein the first kana set corresponding to a kanji includes at least one kana corresponding to the kanjis;

A first data record is a data record other than a second data record in the first word bank, therefore it is possible in this step to acquire a data record as a first data record from a data record other than a second data record in the first word bank.

For example, the second data record and a third data record in a first word bank are second data records which include single entries, therefore a data record is acquired from a data record other than both of the second data records in the first word bank shown in Table 1. It is supposed that the first data record is acquired as a first data record and the first data record includes a multi-kanji entry " 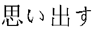 ," the first kana sets ( 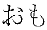 ) and ( 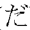 ), and the part of speech of the multi-kanji entry is a "five-segment verb,"

In step 203, whether a plurality of target data records corresponding to the first data record are present in a second word bank is determined, wherein target entries in each target data record are different constituent parts of the multi-kanji entry, and wherein target entries in each target data record form the multi-kanji entry, and wherein a second kana set corresponding to each kanji in the target entry in the target data record is respectively the same as the first kana set corresponding to each kanji.

Optionally, it can be realized in this step by the following steps 2031 through 2033, which are described respectively as follows:

In step 2031, the multi-kanji entry in a first data record is divided into N single entries, wherein N is an integer greater than 1.

Optionally, in this step, the multi-kanji entry may be divided into N single entries each of which includes a kanji. For example, a multi-kanji entry " 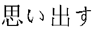 " in a first data record may be divided into two single entries which are " 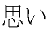 " and " 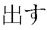 " respectively.

In step 2032, whether a target data record corresponding to each single entry is present in a second word bank is determined, wherein the target data record corresponding to each single entry includes the single entry and a second kana set corresponding to the kanji of the single entry, and the second kana set corresponding to the kanji is the same as the first kana set corresponding to the kanji.

Optionally, for any single entry in the N single entries, whether the second word bank includes a data record of the single entry is determined. If the data record is found, it is judged whether the second kana set corresponding to the kanji of the single entry in the data record is the same as the first kana set corresponding to the kanji of the single entry in a first data record; if it is judged that the second kana set corresponding to the kanji in the single entry is the same as the first kana set corresponding to the kanji, the data record is used as the target data record corresponding to the single entry, otherwise, it is determined that no target data record corresponding to the single entry is present in a second word bank.

For example, for a single entry " 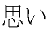 ," the first data record which includes the single entry " 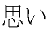 " " is found in a second word bank shown in Table 2, wherein the first data record includes the single entry " 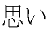 ," a second kana set ( 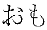 ) and a part of speech being a "five-segment verb." A second kana set ( 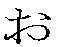 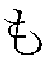 ) corresponding to the kanji " 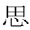 " in the single entry " 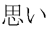 " in the first data record is the same as a first kana set ( 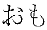 ) corresponding to the kanji " 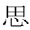 " in the single entry " 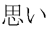 " in a first data record. Therefore, the first data record is the target data record corresponding to the single entry " 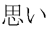 ."

For another example, for a single entry " 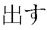 " the second data record which includes the single entry " 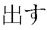 " is found in a second word bank shown in Table 2, wherein the second data record includes the single entry " 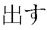 ," a second kana set ( 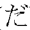 ) and a part of speech being a "five-segment verb." The second kana set ( 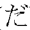 ) corresponding to the kanji ( 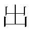 ) in the single entry " 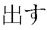 " in the second data record is the same as the first kana set ( 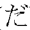 ) corresponding to the kanji " 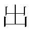 " in the single entry " 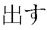 " in a first data record, therefore the second data record is the target data record corresponding to the single entry " 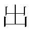 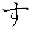 ".

In step 2033, if a target data record corresponding to each single entry is present in a second word bank, it is determined that a plurality of target data records corresponding to a first data record are present in the second word bank.

For example, for two single entries which are divided by a multi-kanji entry " 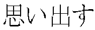 ," both of the single entries have corresponding data records such that it may be determined that the plurality of target data records corresponding to a first data record are present in the second word bank.

Optionally, if no target data record corresponding to each single entry is present in the second word bank, it may be determined that the plurality of target data records corresponding to a first data record are present in the second word bank.

If it is determined that the plurality of target data records corresponding to a first data record are present in the second word bank, it is not required to add the first data record in the second word bank, i.e., the plurality of data records may be used in the second word bank to replace the first data record so as to decrease the number of data records in the second word bank.

In step 204, the first data record is saved in the second word bank if the plurality of target data records are not present in the second word bank.

In the embodiments of the present disclosure, for any first data record in the first word bank, if a plurality of target data records are present in the second word bank and the second kana set corresponding to a kanji in a target entry in each target data record is the same as the first kana set corresponding to the kanji in the first data record, the first data record is not saved in the second word bank. If the plurality of target data records are not present in the second word bank, the first data record is then saved in the second word bank, which deceases the number of data records in the second word bank and reduces the capacity of the second word bank. The efficiency of annotating kanas may be improved when the second word bank is configured for annotating the kana or kanas of each kanji in a Japanese text. Due to the small capacity of the second word bank, the second word bank may be installed in a mobile terminal so that a kana or kanas of each kanji in a Japanese text may be annotated in a mobile terminal.

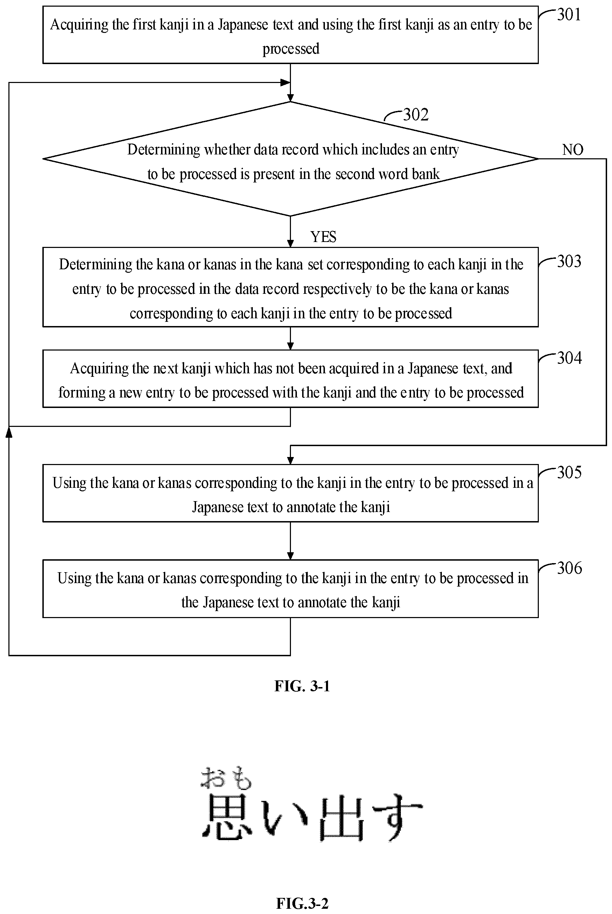

Referring to FIG. 3-1, an embodiment of the present disclosure provides a method for annotating kanas, wherein a second word bank acquired by any of the above embodiments in this method may be used to mark the kanas of the kanjis in a Japanese text. The method includes:

In step 301, the first kanji in a Japanese text is acquired and the first kanji is used as an entry to be processed.

For example, for a Japanese text " 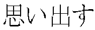 ," the first kanji " 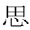 " is used as an entry to be processed.

In step 302, whether the second word bank includes a data record which includes an entry to be processed is determined; step 303 is performed if the second word bank includes the data record; and otherwise, step 305 is performed.

Whether a data record which includes an entry to be processed " 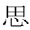 " is present in the second word bank shown in Table 2 is determined. The finding result is that the third data record which includes an entry to be processed " 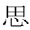 " in Table 2 is present.

In step 303, the kana or kanas in the kana set corresponding to each kanji in the entry to be processed in the data record is determined respectively to be the kana or kanas corresponding to each kanji in the entry to be processed.

For example, the kana in the kana set ( 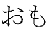 ) corresponding to the kanji " 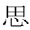 " in the entry to be processed in the third data record is determined to be the kana corresponding to the kanji " 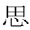 ," i.e., the kanas corresponding to the kanji " 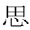 " are 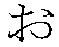 and 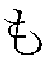 .

In step 304, the next kanji which has not been acquired in a Japanese text is acquired, and the kanji and the entry to be processed form a new entry to be processed, and then step 302 is performed.

The next kanji " 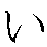 " which has not been acquired is acquired from the Japanese text " 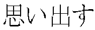 ," wherein the entry to be processed " 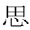 " and the acquired kanji " 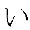 " form a new entry to be processed " 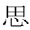 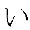 ." Whether a data record which includes an entry to be processed " 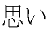 " is present in the second word bank shown in Table 2 is determined. The finding result is that the first data record which includes an entry to be processed " 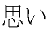 " in Table 2 is present. The kanas in the kana set ( 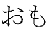 ) corresponding to the kanji " 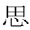 " in the kanji " 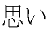 " in the entry to be processed in the first data record are determined to be the kanas corresponding to the kanji " 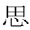 " i.e., the kanas corresponding to the kanji " 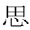 " are 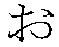 and 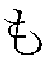 .

The next kanji " 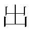 " which has not been acquired is acquired from the Japanese text " 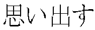 ," wherein the entry to be processed " 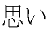 " and the acquired kanji " 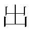 " form a new entry to be processed " 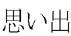 ." It is found whether a data record which includes an entry to be processed " 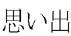 " is present in the second word bank shown in Table 2, and the result indicates that no data record which includes an entry to be processed " 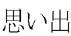 " in Table 2 is present, and then step 305 is performed.

In step 305, the kana or kanas corresponding to the kanji in the entry to be processed are used in a Japanese text for annotating the kanji.

For example, in the entry to be processed " 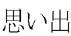 ," only the kanji " 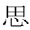 " has corresponding kanas which are 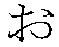 and 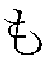 respectively; and therefore, in the Japanese text " 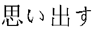 ," kanas corresponding to the kanji " 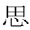 " are used to mark the kanji " 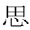 " and the result acquired is shown in FIG. 3-2.

In step 306, if a kanji which is not annotated with a kana or kanas is present in a Japanese text, the first kanji is acquired from the kanjis which are not annotated with kanas and the first kanji is used as an entry to be processed, and then 302 is performed.

If no kanji which is not annotated with a kana or kanas is present in the Japanese text, the operation is ended, and each kanji in the Japanese text is annotated with a kana or kanas.

The following are the embodiments of the apparatus in the present disclosure and the embodiments may be used to execute the method in the present disclosure. For details not disclosed in the embodiments of the apparatus in the present disclosure, please refer to the embodiments of the method in the present disclosure.

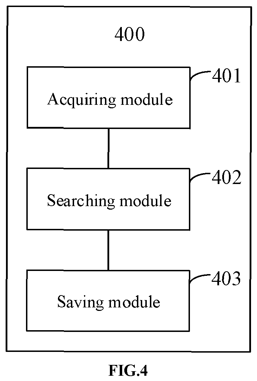

Referring to FIG. 4, an embodiment of the present disclosure provides an apparatus 400 for processing word banks. The apparatus includes:
an acquiring module 401, configured to acquire a first data record in a first word bank, wherein the first data record includes a multi-kanji entry and a first kana set corresponding to each kanji in the multi-kanji entry, the multi-kanji entry being an entry which includes a plurality of kanjis, and the first kana set corresponding to a kanji including at least one kana corresponding to the kanji;
a searching module 402, configured to search for a plurality of target data records corresponding to the first data record in the second word bank, wherein target entries in each of the plurality of target data records are different constituent parts of the multi-kanji entry, the target entries in each of the plurality of target data records form the multi-kanji entry, and a second kana set corresponding to each kanji in the target entry in the target data record is respectively the same as the first kana set corresponding to the each kanji; and
a saving module 403, configured to save the first data record in the second word bank, when the plurality of target data records corresponding to the first data record are not found in the second word bank.

Optionally, the searching module 402 includes:
a dividing unit, configured to divide the multi-kanji entry in the first data record into N single entries, wherein N is an integer greater than 1, and the single entries are entries each including a kanji;
a searching unit, configured to search for a target data record corresponding to each of the N single entries in the second word bank, wherein the target data record corresponding to single entry comprises the each of the N single entries and the second kana set corresponding to the kanji of the each of the N single entries, and the second kana set corresponding to the kanji is the same as the first kana set corresponding to the kanji; and
a first determining unit, configured to determine that the plurality of target data records corresponding to the first data record are not found in the second word bank when the target data record corresponding to the each of the N single entries is not found in the second word bank.

Optionally, the saving module 403 may further be configured to:
save each second data record in the first word bank, wherein the second data record includes a single entry and a first kana set corresponding to the kanji in the single entry.

Optionally, the saving module 403 includes:
an acquiring unit, configured to acquire any data record in the first word bank; and
a second determine unit, configured to determine that the entry in the data record is a single entry and save the data record in the second word bank, when the data record includes a first kana set.

Optionally, the saving module 403 may further be configured to:
save a data record which includes a preset application scenario in the third word bank in the first word bank, wherein each data record in the third word bank includes an entry, a kana set corresponding to each kanji in the entry and an application scenario.

Optionally, the saving module 403 further includes:
a second acquiring unit, configured to acquire a data record which includes a preset application scenario from the third word bank, wherein the data record includes an entry, at least one kana set corresponding to each kanji in the first entry, a usage frequency of each of the at least one kana set, and the preset application scenario;
a selecting unit, configured to select, according to the usage frequency of at least one kana set corresponding to the each kanji, a kana set corresponding to the each kanji from at least one kana set corresponding to the each kanji respectively; and
a saving unit, configured to form the first data record with an entry and the kana set selected for the each kanji and save the first data record in the first word bank.

In the embodiments of the present disclosure, for any first data record in the first word bank, if a plurality of target data record are present in the second word bank and the second kana set corresponding to a kanji in a target entry in each target data record is the same as the first kana set corresponding to the kanji in the first data record, the first data record is not saved in the second word bank. If the plurality of target data records are not present in the second word bank, the first data record is then saved in the second word bank, which deceases the number of data records in the second word bank and reduces the capacity of the second word bank. The efficiency of annotating kanas may be improved when the second word bank is configured for annotating the kana or kanas of each kanji in a Japanese text.

With regard to the apparatus in the above embodiment, the functions implemented by the modules are described in detail in embodiments of the method, which is not described in detail herein.

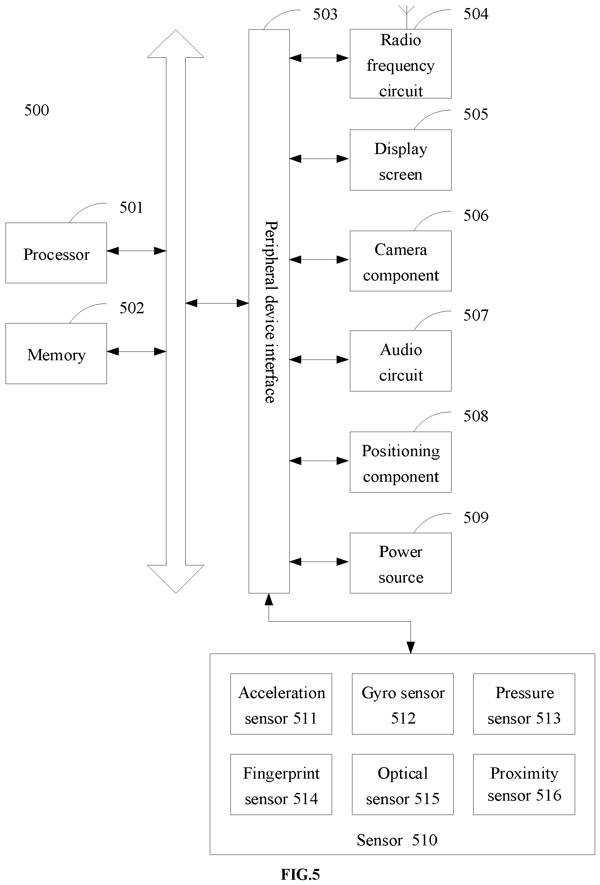

FIG. 5 is a structural block diagram of a terminal 500 according to one embodiment of the present disclosure. The terminal 500 may be a smart phone, a tablet computer, a moving picture experts group audio layer III (MP3) player, a moving picture experts group audio layer IV (MP4) player, a laptop or desk computer. The terminal 500 may also be called a user equipment (UE), a portable terminal, a laptop terminal, a desk terminal, or the like.

Generally, the terminal 500 includes a processor 501 and a memory 502.

The processor 501 may include one or more processing cores, such as a 4-core processor and an 8-core processor. The processor 501 may be formed by at least one hardware of a digital signal processor (DSP), a field-programmable gate array (FPGA), and a programmable logic array (PLA). The processor 501 may also include a main processor and a coprocessor. The main processor is a processor for processing the data in an awake state, and is also called a central processing unit (CPU). The coprocessor is a low-power-consumption processor for processing the data in a standby state. In some embodiments, the processor 501 may be integrated with a graphics processing unit (GPU), which is configured to render and draw the content that needs to be displayed by a display screen. In some embodiments, the processor 501 may also include an artificial intelligence (AI) processor configured to process computational operations related to machine learning.

The memory 502 may include one or more computer-readable storage mediums, which can be non-transitory. The memory 502 may also include a high-speed random access memory, as well as a non-volatile memory, such as one or more disk storage devices and flash storage devices. In some embodiments, the non-transitory computer-readable storage medium in the memory 502 is configured to store at least one instruction. The at least one instruction is configured to be executed by the processor 501 to implement the method provided by the method embodiments of the present disclosure.

In some embodiments, the terminal 500 also optionally includes a peripheral device interface 503 and at least one peripheral device. The processor 501, the memory 502, and the peripheral device interface 503 may be connected by a bus or a signal line. Each peripheral device may be connected to the peripheral device interface 503 by a bus, a signal line or a circuit board. For example, the peripheral device includes at least one of a radio frequency circuit 504, a touch display screen 505, a camera 506, an audio circuit 507, a positioning component 508 and a power source 509.

The peripheral device interface 503 may be configured to connect at least one peripheral device associated with an input/output (I/O) to the processor 501 and the memory 502. In some embodiments, the processor 501, the memory 502 and the peripheral device interface 503 are integrated on the same chip or circuit board. In some other embodiments, any one or two of the processor 501, the memory 502 and the peripheral device interface 503 may be implemented on a separate chip or circuit board, which is not limited in the present embodiment.

The radio frequency circuit 504 is configured to receive and transmit an RF (Radio Frequency) signal, which is also referred to as an electromagnetic signal. The radio frequency circuit 504 communicates with a communication network and other communication devices via the electromagnetic signal. The radio frequency circuit 504 converts the electrical signal into the electromagnetic signal for transmission, or converts the received electromagnetic signal into the electrical signal. Optionally, the radio frequency circuit 504 includes an antenna system, an RF transceiver, one or more amplifiers, a tuner, an oscillator, a digital signal processor, a codec chipset, a subscriber identity module card, and the like. The radio frequency circuit 504 can communicate with other terminals via at least one wireless communication protocol. The wireless communication protocol includes, but not limited to, the World Wide Web, a metropolitan area network, an intranet, various generations of mobile communication networks (2G, 3G, 4G, or 5G), a wireless local area network, and/or a wireless fidelity (Wi-Fi) network. In some embodiments, the RF circuit 504 may also include near-field communication (NFC) related circuits, which is not limited in the present disclosure.

The display screen 505 is configured to display a user interface (UI). The UI may include graphics, text, icons, videos, and any combination thereof. When the display screen 505 is a touch display screen, the display screen 505 also has the capacity to acquire touch signals on or over the surface of the display screen 505. The touch signal may be input into the processor 501 as a control signal for processing. At this time, the display screen 505 may also be configured to provide virtual buttons and/or virtual keyboards, which are also referred to as soft buttons and/or soft keyboards. In some embodiments, one display screen 505 may be disposed on the front panel of the terminal 500. In some other embodiments, at least two display screens 505 may be disposed respectively on different surfaces of the terminal 500 or in a folded design. In further embodiments, the display screen 505 may be a flexible display screen disposed on the curved or folded surface of the terminal 500. Even the display screen 505 may have an irregular shape other than a rectangle; that is, the display screen 505 may be an irregular-shaped screen. The display screen 505 may be a liquid crystal display (LCD) screen, an organic light-emitting diode (OLED) screen or the like.

The camera component 506 is configured to capture images or videos. In some embodiments of the present disclosure, the camera component 506 includes a front camera and a rear camera. Usually, the front camera is placed on the front panel of the terminal, and the rear camera is placed on the back of the terminal. In some embodiments, at least two rear cameras are disposed, and are at least one of a main camera, a depth-of-field camera, a wide-angle camera, and a telephoto camera respectively, so as to realize a background blurring function achieved by fusion of the main camera and the depth-of-field camera, panoramic shooting and virtual reality (VR) shooting functions achieved by fusion of the main camera and the wide-angle camera or other fusion shooting functions. In some embodiments, the camera component 506 may also include a flashlight. The flashlight may be a mono-color temperature flashlight or a two-color temperature flashlight. The two-color temperature flash is a combination of a warm flashlight and a cold flashlight and can be configured for light compensation at different color temperatures.

The audio circuit 507 may include a microphone and a speaker. The microphone is configured to collect sound waves of users and environments, and convert the sound waves into electrical signals which are input into the processor 501 for processing, or input into the RF circuit 504 for voice communication. For the purpose of stereo acquisition or noise reduction, a plurality of microphones may be respectively disposed at different locations of the terminal 500. The microphone may also be an array microphone or an omnidirectional acquisition microphone. The speaker is then configured to convert the electrical signals from the processor 501 or the radio frequency circuit 504 into the sound waves. The speaker may be a conventional film speaker or a piezoelectric ceramic speaker. When the speaker is the piezoelectric ceramic speaker, the electrical signal can be converted into not only human-audible sound waves but also the sound waves which are inaudible to humans for the purpose of ranging and the like. In some embodiments, the audio circuit 507 may also include a headphone jack.

The positioning component 508 is configured to locate the current geographic location of the terminal 500 to implement navigation or location based services (LBS). The positioning component 1508 may be the global positioning system (GPS) from the United States, the Beidou positioning system from China, the Grenas satellite positioning system from Russia or the Galileo satellite navigation system from the European Union.

The power source 509 is configured to power up various constituent parts in the terminal 500. The power source 509 may be alternating current, direct current, a disposable battery, or a rechargeable battery. When the power source 509 includes the rechargeable battery, the rechargeable battery may a wired rechargeable battery or a wireless rechargeable battery. The wired rechargeable battery is a battery charged by a cable line, and wireless rechargeable battery is charged by a wireless coil. The rechargeable battery may also support the fast charging technology.

In some embodiments, terminal 500 also includes one or more sensors 510. The one or more sensors 510 include, but not limited to, an acceleration sensor 511, a gyro sensor 512, a pressure sensor 513, a fingerprint sensor 514, an optical sensor 515 and a proximity sensor 516.

The acceleration sensor 511 may detect magnitudes of accelerations on three coordinate axes of a coordinate system established by the terminal 500. For example, the acceleration sensor 511 may be configured to detect components of a gravitational acceleration on the three coordinate axes. The processor 501 may control the touch display screen 505 to display a user interface in a landscape view or a portrait view according to a gravity acceleration signal collected by the acceleration sensor 511. The acceleration sensor 511 may also be configured to collect motion data of a game or a user.

The gyro sensor 512 can detect a body direction and a rotation angle of the terminal 500, and can cooperate with the acceleration sensor 511 to collect a 3D motion of the user on the terminal 500. Based on the data collected by the gyro sensor 512, the processor 501 can serve the following functions: motion sensing (such as changing the UI according to a user tilt operation), image stabilization during shooting, game control and inertial navigation.

The pressure sensor 513 may be disposed on a side frame of the terminal 500 and/or a lower layer of the touch display screen 505. When the pressure sensor 513 is disposed on the side frame of the terminal 500, a user's holding signal to the terminal 500 can be detected. The processor 501 can perform left-right hand recognition or quick operation according to the holding signal collected by the pressure sensor 513. When the pressure sensor 513 is disposed on the lower layer of the touch display screen 505, the processor 501 controls an operable control on the UI according to a user's pressure operation on the touch display screen 505. The operable control includes at least one of a button control, a scroll bar control, an icon control, or a menu control.

The fingerprint sensor 514 is configured to collect a user fingerprint. The processor 501 identifies the user identity based on the fingerprint collected by the fingerprint sensor 514, or the fingerprint sensor 514 identifies the user's identity based on the collected fingerprint. When the user's identity is identified as trusted, the processor 501 authorizes the user to perform related sensitive operations, such as unlocking the screen, viewing encrypted information, downloading software, paying, and changing settings. The fingerprint sensor 514 may be provided on the front, back, or side of the terminal 500. When the terminal 500 is provided with a physical button or a manufacturer's Logo, the fingerprint sensor 514 may be integrated with the physical button or the manufacturer's Logo.

The optical sensor 515 is configured to collect ambient light intensity. In one embodiment, the processor 501 may control the display brightness of the touch display screen 505 according to the ambient light intensity collected by the optical sensor 515. For example, when the ambient light intensity is high, the display brightness of the touch display screen 505 is increased; and when the ambient light intensity is low, the display brightness of the touch display screen 505 is decreased. In another embodiment, the processor 501 may also dynamically adjust shooting parameters of the camera component 506 according to the ambient light intensity collected by the optical sensor 515.

The proximity sensor 516, also referred to as a distance sensor, is usually disposed on the front panel of the terminal 500. The proximity sensor 516 is configured to capture a distance between the user and a front surface of the terminal 500. In one embodiment, when the proximity sensor 516 detects that the distance between the user and the front surface of the terminal 500 becomes gradually smaller, the processor 501 controls the touch display screen 505 to switch from a screen-on state to a screen-off state. When it is detected that the distance between the user and the front surface of the terminal 500 gradually increases, the processor 501 controls the touch display screen 505 to switch from the screen-off state to the screen-on state.

It will be understood by those skilled in the art that the structure shown in FIG. 5 does not constitute a limitation to the terminal 500, and may include more or fewer components than those illustrated, or combine some components or adopt different component arrangements.

Other embodiments of the present disclosure will be apparent to those skilled in the art from consideration of the specification and practice of the present disclosure. This application is intended to cover any variations, uses, or adaptations of the present disclosure following the general principles thereof and including common knowledge or commonly used technical measures which are not disclosed herein. The specification and embodiments are to be considered as exemplary only, and the true scope and spirit of the present disclosure are indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure is only limited by the appended claims.

## Claims

1. A method for processing word banks, comprising:
acquiring a first data record in a first word bank, wherein the first data record comprises a multi-kanji entry and a first kana set corresponding to each kanji in the multi-kanji entry, the multi-kanji entry being an entry which comprises a plurality of kanjis, and the first kana set corresponding to a kanji comprising at least one kana corresponding to the kanji;
searching for a plurality of target data records corresponding to the first data record in a second word bank, wherein target entries in each of the plurality of target data records are different constituent parts of the multi-kanji entry, the target entries in the each of the plurality of target data records form the multi-kanji entry, and a second kana set corresponding to each kanji in the target entry in the target data record is the same as the first kana set corresponding to the each kanji; and
saving the first data record in the second word bank, when the plurality of target data records corresponding to the first data record are not found in the second word bank.

2. The method according to claim 1, wherein searching for the plurality of target data records corresponding to the first data record in the second word bank comprises:
dividing the multi-kanji entry in the first data record into N single entries, wherein N is an integer greater than 1, and the single entries are entries each comprising a kanji;
searching for a target data record corresponding to each of the N single entries in the second word bank, wherein the target data record corresponding to the single entry comprises the each of the N single entries and the second kana set corresponding to the kanji in the each of the N single entries, and the second kana set corresponding to the kanji is the same as the first kana set corresponding to the kanji; and
determining that the plurality of target data records corresponding to the first data record are not found in the second word bank, when the target data record corresponding to the each of the N single entries is not found in the second word bank.

3. The method according to claim 1 or 2, wherein before acquiring the first data record in the first word bank, the method further comprises:
saving each second data record in the first word bank in the second word bank, wherein the second data record comprises a single entry and a first kana set corresponding to the kanji in the single entry.

4. The method according to claim 3, wherein saving the each second data record in the first word bank in the second word bank comprises:
acquiring any data record in the first word bank; and
determining that an entry in the data record is a single entry and saving the data record in the second word bank, when the data record comprises a first kana set.

5. The method according to claim 1 or 2, wherein before acquiring the first data record in the first word bank, the method further comprises:
saving a data record which comprises a preset application scenario in a third word bank in the first word bank, wherein each data record in the third word bank comprises an entry, a kana set corresponding to each kanji in the entry and an application scenario.

6. The method according to claim 5, wherein saving the data record which comprises the preset application scenario in the third word bank in the first word bank comprises:
acquiring a data record which comprises a preset application scenario from the third word bank, wherein the data record comprises an entry, at least one kana set corresponding to each kanji in the first entry, a usage frequency of each of the at least one kana set, and the preset application scenario;
selecting, according to the usage frequency of at least one kana set corresponding to the each kanji, a kana set corresponding to the each kanji from at least one kana set corresponding to the each kanji respectively; and
forming a first data record with the entry and the kana set selected for the each kanji and saving the first data record in the first word bank.

7. An apparatus for processing word banks, comprising:
an acquiring module, configured to acquire a first data record in a first word bank, wherein the first data record comprises a multi-kanji entry and a first kana set corresponding to each kanji in the multi-kanji entry, the multi-kanji entry being an entry which comprises a plurality of kanjis, and the first kana set corresponding to the kanji comprising at least one kana corresponding to the kanji;
a searching module, configured to search for a plurality of target data records corresponding to the first data record in the second word bank, wherein target entries in each of the plurality of target data records are different constituent parts of the multi-kanji entry, the target entries in the each of the plurality of target data records form the multi-kanji entry, and a second kana set corresponding to each kanji in the target entry in the target data record is respectively the same as the first kana set corresponding to the each kanji; and
a saving module, configured to save the first data record in the second word bank, when the plurality of target data records corresponding to the first data record are not found in the second word bank.

8. The apparatus according to claim 7, wherein the searching module comprises:
a dividing unit, configured to divide the multi-kanji entry in the first data record into N single entries, wherein N is an integer greater than 1, and the single entries are entries each comprising a kanji;
a searching unit, configured to search for a target data record corresponding to each of the N single entries in the second word bank, wherein the target data record corresponding to the single entry comprises the each of the N single entries and the second kana set corresponding to the kanji in the each of the N single entries, and the second kana set corresponding to the kanji is the same as the first kana set corresponding to the kanji; and
a first determining unit, configured to determine that the plurality of target data records corresponding to the first data record are not found in the second word bank, when the target data record corresponding to the each of the N single entries is not found in the second word bank.

9. The apparatus according to claim 7 or 8, wherein the saving module is further configured to:
save each second data record in the first word bank in the second word bank, wherein the second data record comprises a single entry and a first kana set corresponding to the kanji in the single entry.

10. The apparatus according to claim 9, wherein the saving module comprises:
a first acquiring unit, configured to acquire any data record in the first word bank; and
a second determining unit, configured to determine that an entry in the data record is a single entry and save the data record in the second word bank, when the data record comprises a first kana set.

11. The apparatus according to claim 7 or 8, wherein the saving module is further configured to:
save a data record which comprises a preset application scenario in a third word bank in the first word bank, wherein each data record in the third word bank comprises an entry, a kana set corresponding to each kanji in the entry and an application scenario.

12. The apparatus according to claim 11, wherein the saving module further comprises:
a second acquiring unit, configured to acquire a data record which comprises a preset application scenario from the third word bank, wherein the data record comprises an entry, at least one kana set corresponding to each kanji in the first entry, a usage frequency of each of the at least one kana set, and the preset application scenario;
a selecting unit, configured to select, according to the usage frequency of at least one kana set corresponding to the each kanji, a kana set corresponding to the each kanji from at least one kana set corresponding to the each kanji respectively; and
a saving unit, configured to form a first data record with the entry and a kana set selected for the each kanji and save the first data record in the first word bank.
